# EUROPEAN PATENT SPECIFICATION

(11) **EP 1 748 242 B1**
(45) Date of publication and mention of the grant of the patent: **02.12.2009**
(21) Application number: 05076719.3
(22) Date of filing: 26.07.2005
(51) Int. Cl.: F16L 19/065

(54) **Clamping ring for a high tensile strength coupling**
Klemmring für eine Rohrkupplung mit hoher Zugfestigkeit
Bague de serrage pour un raccord de tuyauterie avec résistance à la traction élevée

(43) Date of publication of application: 31.01.2007
(73) Proprietor: H.A. Prince Beheer Bergen op Zoom B.V., 4691 RX Tholen (NL)
(72) Inventor: Prince, Hendrikus Andreas, 4624 CP Bergen op Zoom (NL)
(74) Representative: Hoorweg, Petrus Nicolaas

(56) References cited:
- EP-A- 1 028 281
- GB-A- 2 292 780
- US-A- 4 666 192
- US-B1- 6 464 267

## Description

The invention relates to a clamping ring for receiving in a nut body of a device for connecting in tensively strong manner two mutually in line, tubular ends of pipes for gas or liquid. The invention also relates to a device for connecting in tensively strong manner, which device comprises a sleeve with a screw thread and a nut body embodied with a co-acting screw thread, which sleeve is pushed with clearance fit over the tubular ends and which nut body has an inner periphery narrowing towards the outside, in which nut body a clamping ring is received.

Many proposals have already been made in practice in respect of tensively strong couplings for in-line mutual coupling of tubular ends. These ends can be ends of pipes but also connecting stubs of valves and the like. The problem in connecting these tubular ends is that due to the operating pressure of the medium in the pipe system the coupling will tend to come loose, which problem occurs even more in T-junctions and bends. However, the external pressure caused by the clamping ring in the sleeve arranged around the tubular ends via the nut body cannot be increased without limit since the tubular ends may be deformed. EP 1028281 in the name of applicant describes a tensively strong device wherein the axial tensile force is absorbed without having to impose an excessive clamping force. This device is not suitable for every type of tube material, and is particularly not suitable for PVC tubes because the material from which the clamping rings are typically made (for instance a POM (polyoxymethylene) material) is too soft for PVC (polyvinyl chloride).

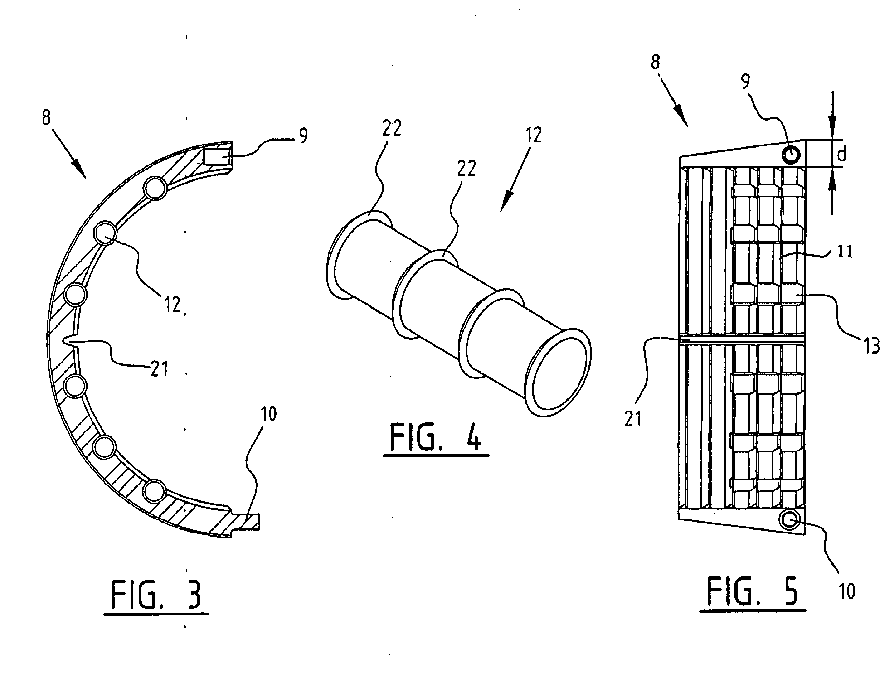

US 6464267 discloses a pipe coupling including a housing and a conical split ring. The split ring or clamping ring 4 has an inner surface provided with a number of slots 45 - see figure 5. Slots 45 receive inserts 46 - see figure 7 - made of a hard material. Inserts 46 serve as hard teeth projecting inwardly past the inner face of the split ring at circumferentially spaced locations thereof to become embedded in the outer face of the pipe. The teeth defined by the hard inserts 46 are intended to firmly clamp pipes of hard material, such as of metal or hard plastic.

The present invention has for its object to provide a clamping ring with which a tensively strong coupling can be realized which is suitable for both harder materials (for instance PVC) and softer materials (for instance PE or HDPE).

The tensively strong coupling according to the invention is distinguished by the features of claim 1.

Owing to this improved clamping ring it is possible to mount the tubular ends with only local damage (at the position of the local thickened portions), wherein a sufficient clamping action is also brought about for tubular ends manufactured from harder materials such as PVC. In other words, too great an uninterrupted plastic deformation of the plastic, which could adversely affect the lifespan of the plastic outer end, is on the one hand prevented while a sufficient clamping tension is on the other hand still provided.

According to the preferred embodiment, the elements are substantially elongate, for instance pins, which are arranged in axial direction, for instance in axial recesses in the inner surface. In this way the elements can be arranged in simple manner and no additional fixing means are required. The axial recesses are for instance practically cylindrical, wherein a part of an element arranged therein protrudes relative to the inner surface.

According to the possible embodiment, the elements lie at a mutual distance on the inner surface of the clamping ring as seen along a periphery. The elements are preferably distributed regularly along the periphery of the inner surface.

According to a possible embodiment, the elements are provided only along a part of the length of the clamping ring, typically at the position where the wall thickness of the clamping ring is greatest.

According to the preferred embodiment, the clamping ring has a wall thickness d which decreases in axial direction. This design is particularly suitable for a nut body which has an inner periphery narrowing to the outside.

The inner surface of the clamping ring can further be provided with a friction-increasing surface, such as a toothing in the longitudinal direction. It is advantageous in such a case to give the elements a form which is adapted to the friction-increasing surface. In the case of a toothing of the inner surface, pins can for instance be used having local thickened portions with a form which is complementary to that of the toothing.

The clamping ring is preferably constructed from two half-shells which are mutually connected for instance using pin-hole connections. The two-part construction simplifies the manufacture of the clamping ring.

The clamping ring is preferably manufactured from a plastic such as a POM material.

The invention will be further elucidated in the figure description hereinbelow of a non-limitative exemplary embodiment. In the drawing:
fig. 1 shows a perspective view of two mutually abutting tubular ends, around which is arranged a tensively strong coupling device according to the invention, wherein the components are exploded;
fig. 2 shows a perspective view corresponding with fig. 1 wherein the components are assembled;
fig. 3 shows a cross-section of one of the shells of the clamping ring according to the invention of fig. 1;
fig. 4 is a perspective view of a pin for the clamping ring of fig. 1;
fig. 5 is a front view of one of the shells of the clamping ring of fig. 1.

Corresponding components are designated in the figures with the same reference numerals.

Each tubular end of two tubular ends lying mutually in line is designated B. Sleeve 1 is arranged around the tubular ends, which sleeve 1 is provided in the middle with a stop edge 2, so that the tubular ends can be pushed over the same distance into the sleeve. On the inner side of sleeve 1 is arranged a sealing ring 3 which is received in a groove 4 recessed into the inner surface of the sleeve.

Arranged on the outer side at both ends is a screw thread 5 onto which can be rotated a nut body 6 which is likewise provided with a co-acting screw thread on the inner side.

Nut body 6 has an inner surface 6 which converges outward and which transposes on the outer end thereof into a stop edge 17. The inner surface 7 of nut body 6 and the outer surface of tube B thus form a wedge-shaped chamber. A clamping ring 8 according to the invention is received in this chamber. In the shown embodiment the thickness of the wall of the clamping ring increases in the direction of the sleeve, see also figure 5.

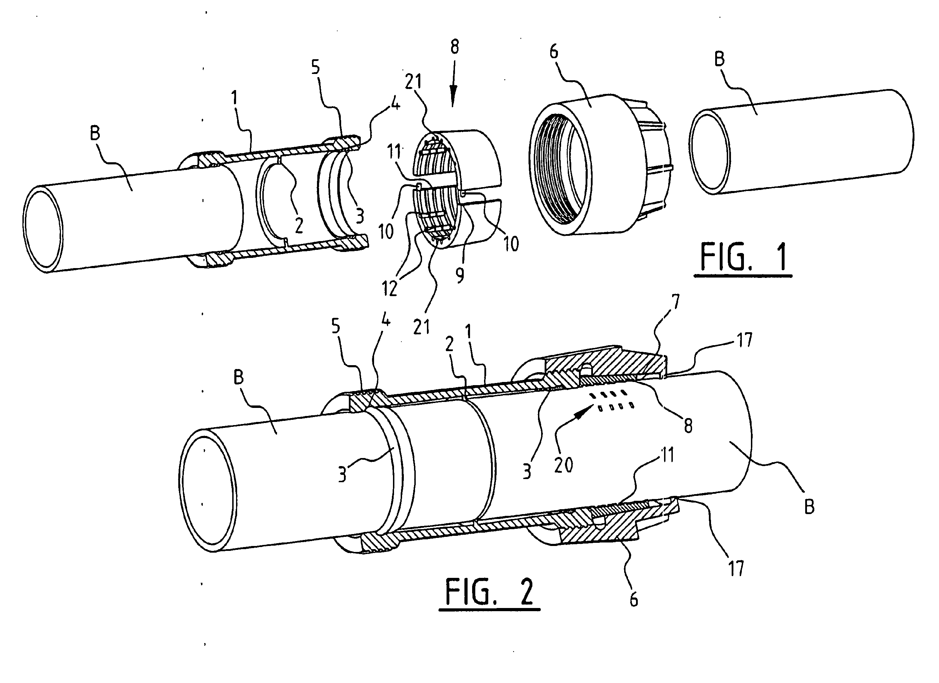

Assembly of the different components takes place as follows. The two shells of clamping ring 8 are mutually connected beforehand and pushed into the nut body, whereafter 50% of the nut body is rotated onto the sleeve. Clamping ring 8 will herein not be loaded and retains its form. Tubular end B is then pushed from top right in fig. 1 through nut body 6 and clamping ring 8 into the right-hand part of sleeve 1. Finally, nut body 6 is fastened more tightly onto the sleeve. Owing to the inclining inner surface of nut body 6 the clamping ring is then pressed in a manner to be further elucidated below against the outer surface of tubular ends B. It is noted that in fig. 2 the left-hand tubular end B is drawn without clamping ring 8 and nut body 6, but these components are likewise arranged thereon in the same manner as described above. A tensively strong coupling is thus created between tubular ends B.

The clamping ring of the shown exemplary embodiment is formed by two shells which are mutually connected by means of pin-hole connections 9, 10. The clamping ring is typically manufactured from a POM (polyoxymethylene) material. For the desired clamping action the clamping ring 8 is provided on the inner side with axial recesses 13 (see figure 5) in which are arranged pins 12 which penetrate into the outer surface during clamping, see patterns 20 in fig. 2. A firm, tensively strong coupling is hereby effected, wherein the tubular ends are damaged only locally and not continuously by the pins. Further provided is a toothing 11 which serves for the clamping action in the case of an HDPE pipe and, in the case of a PVC pipe, prevents pins 12 engaging too deeply in the PVC pipe.

Clamping ring 8 is however held well outside the outer surface of tubular ends B during assembly so that no axial slide marks or other damage to the tubular end occur, which could result in leakage. The tubular end therefore remains clean and can be properly sealed by rubber ring 3. Additional friction-increasing means other than a toothing are also possible. It is thus possible to replace the toothing by a roughened surface which also gives a friction-increasing effect on the outer surface of tubular end B.

Fig. 3 shows a cross-section of the clamping ring of figure 2. In the shown exemplary embodiment six pins are provided per half-shell, although this number can vary depending on the dimensions and the materials of the tubular ends for which the clamping ring is intended. The length and depth of the axial recesses can also be chosen as a function of the application. It is moreover possible to arrange different types of pin, for instance thicker pins in a first part of the clamping ring lying closer to sleeve 1 (where the wall thickness d of the clamping ring is greater), and thinner pins in a second part further removed from the sleeve (where the wall thickness d of the clamping ring is smaller).

The inner surface of a half shell of clamping ring 8 is further provided in the middle with an axial notch 21 extending over the full length of the shell. This notch 21 ensures that the clamping ring shells press uniformly against the tube.

Finally, fig. 4 shows in detail a pin 12 that is arranged in clamping ring 8. The pin is provided with local thickened portions 22 which are intended to engage in the valleys of toothing 11. Such pins are typically manufactured from a hard material such as a metal, and in particular from stainless steel.

The invention is not limited to the above described embodiments. Clamping ring 8 can thus be embodied in different ways within the scope of the claims. The inner surface of the ring is determined subject to the type of material of the tubular ends. The number of sections of the ring can also be freely chosen, i.e. the ring can for instance also be constructed from three parts instead of two. Sleeve 1 can moreover take a random form, wherein within the scope of the invention even the screw thread can be replaced by other coupling systems, for instance a bayonet fitting.

## Claims

1. Clamping ring (8) for receiving in a nut body (6) of a device for connecting in tensively strong manner two mutually in line, tubular ends (B) of pipes for gas or liquid, wherein the clamping ring (8) has an optionally multi-part body with an inner surface directed toward the tubes (8) to be connected, the inner surface of the clamping ring (8) being provided-with a number of elements (12) which are manufactured from a material which is harder than the material of the clamping ring body, and which form local thickened portions of the inner surface of the clamping ring (8), **characterized in that**, the elements (12) are arranged in axially extending recesses in the clamping ring body and have a substantially cylindrical surface protruding relative to the inner surface of the clamping ring (8)

2. Clamping ring (8) as claimed in claim 1, **characterized in that** the elements (12) are substantially elongate and are arranged in axial direction.

3. Clamping ring (8) as claimed in claim 1 or 2,
**characterized in that** the elements (12) lie at a mutual distance on the inner surface of the clamping ring (8) as seen along a periphery.

4. Clamping ring (8) as claimed in any of the foregoing claims, **characterized in that** the elements are pins (12) which are arranged in axial recesses (13) in the inner surface of the clamping ring (8).

5. Clamping ring (8) as claimed in claim 4 **characterized in that** the axial recesses (13) are substantially cylindrical, wherein a part of the element (12) arranged therein protrudes relative to the inner surface of the clamping ring (8)

6. Clamping ring (8) as claimed in any of the foregoing claims, **characterized in that** the elements (12) are distributed regularly along the periphery of the inner surface of the clamping ring (8).

7. Clamping ring (8) as claimed in any of the foregoing claims, **characterized in that** the elements (12) are arranged along a part of the length of the clamping ring (8).

8. Clamping ring (8) as claimed in any of the foregoing claims, **characterized in that** the elements (12) are manufactured from a metal such as stainless steel.

9. Clamping ring (8) as claimed in any of the foregoing claims, wherein the clamping ring (8) has a wall thickness (d), **characterized in that** the wall thickness (d) decreases as seen in axial direction.

10. Clamping ring (8) as claimed in any of the foregoing claims, **characterized in that** the inner surface of the clamping ring (8) is provided with a friction-increasing surface, such as a toothing (11) in the longitudinal direction.

11. Clamping ring as claimed in claim 10, **characterized in that** the elongate elements (12) have a form which is adapted to the friction-increasing surface.

12. Clamping ring (8) as claimed in any of the foregoing claims, **characterized in that** the clamping ring (8) is constructed from two half-shells.

13. Clamping ring (8) as claimed in any of the foregoing claims, **characterized in that** the inner surface is provided with two opposite axial notches (9).

14. Clamping ring (8) as claimed in any of the foregoing claims, **characterized in that** the clamping ring (8) is manufactured from plastic.

15. Device for connecting in tensively strong manner two mutually in line, tubular ends (B) of pipes for gas or liquid, which device comprises a sleeve (1) with a screw thread (5) and a nut body (6) embodied with a co-acting screw thread, which sleeve (1) is pushed with clearance fit over the tubular ends (B) and which nut body (6) has an inner periphery narrowing towards the outside, in which nut body (6) a clamping ring (8) as claimed in any of the foregoing claims is received.

16. Device as claimed in claim 15, **characterized in that** the sleeve (1) is embodied with a sealing ring (3) co-acting with a tubular end (B).

## Patentansprüche

1. Klemmring (8) zur Aufnahme in einem Mutterkörper (6) einer Vorrichtung zum Verbinden zweier relativ zueinander in einer Linie ausgerichteter Rohrenden (B) von Rohrleitungen für Gase oder Flüssigkeiten in spannungsstarker Weise, wobei der Klemmring (8) einen optionalen mehrteiligen Körper hat, mit einer Innenfläche, die in Richtung der zu verbindenden Rohre (B) zeigt, wobei die Innenfläche des Klemmrings (8) mit einer Anzahl von Elementen (12) ausgestattet ist, die aus einem Material hergestellt sind, das härter als das Material des Klemmringkörpers ist, und die lokale verdickte Abschnitte der Innenfläche des Klemmrings (8) ausbilden, **dadurch gekennzeichnet, dass** die Elemente (12) in sich axial erstreckenden Aussparungen im Klemmringkörper angeordnet sind und dass sie eine im Wesentlichen zylindrische Oberfläche haben, die relativ zur Innenfläche des Klemmrings (8) hervorsteht.

2. Klemmring (8) nach Anspruch 1, **dadurch gekennzeichnet, dass** die Elemente (12) im Wesentlichen länglich und in axialer Richtung angeordnet sind.

3. Klemmring (8) nach Anspruch 1 oder 2, **dadurch gekennzeichnet, dass** die Elemente (12) entlang eines Umfangs in Abständen voneinander auf der Innenfläche des Klemmrings (8) liegen.

4. Klemmring (8) nach einem der vorhergehenden Ansprüche, **dadurch gekennzeichnet, dass** die Elemente Stifte (12) sind, die in axialen Aussparungen (13) in der Innenfläche des Klemmrings (8) angeordnet sind.

5. Klemmring (8) nach Anspruch 4, **dadurch gekennzeichnet, dass** die axialen Aussparungen (13) im Wesentlichen zylindrisch sind, wobei ein Teil des in ihnen angeordneten Elements (12) relativ zur Innenfläche des Klemmrings (8) hervorsteht.

6. Klemmring (8) nach einem der vorhergehenden Ansprüche, **dadurch gekennzeichnet, dass** die Elemente (12) gleichmäßig entlang des Umfangs der Innenfläche des Klemmrings (8) verteilt sind.

7. Klemmring (8) nach einem der vorhergehenden Ansprüche, **dadurch gekennzeichnet, dass** die Elemente (12) entlang eines Teils der Länge des Klemmrings (8) angeordnet sind.

8. Klemmring (8) nach einem der vorhergehenden Ansprüche, **dadurch gekennzeichnet, dass** die Elemente (12) aus einem Metall wie etwa rostfreiem Stahl hergestellt sind.

9. Klemmring (8) nach einem der vorhergehenden Ansprüche, wobei der Klemmring (8) eine Wandstärke (d) hat, **dadurch gekennzeichnet, dass** die Wandstärke (d) in axialer Richtung gesehen abnimmt.

10. Klemmring (8) nach einem der vorhergehenden Ansprüche, **dadurch gekennzeichnet, dass** die Innenfläche des Klemmrings (8) mit einer reibungserhöhenden Oberfläche versehen ist, wie etwa mit einer Zahnung (11) in Längsrichtung.

11. Klemmring nach Anspruch 10, **dadurch gekennzeichnet, dass** die länglichen Elemente (12) eine Form haben, die auf die reibungserhöhende Oberfläche angepasst ist.

12. Klemmring (8) nach einem der vorhergehenden Ansprüche, **dadurch gekennzeichnet, dass** der Klemmring (8) aus zwei Halbschalen hergestellt wird.

13. Klemmring (8) nach einem der vorhergehenden Ansprüche, **dadurch gekennzeichnet, dass** die Innenfläche mit zwei entgegengesetzt liegenden axialen Aussparungen (9) versehen ist.

14. Klemmring (8) nach einem der vorhergehenden Ansprüche, **dadurch gekennzeichnet, dass** der Klemmring (8) aus Kunststoff hergestellt ist.

15. Vorrichtung zum Verbinden zweier relativ zueinander in einer Linie ausgerichteter Rohrenden (B) von Rohrleitungen für Gase oder Flüssigkeiten in spannungsstarker Weise, wobei die Vorrichtung folgendes umfasst: eine Muffe (1) mit einem Schraubengewinde (5) und einen Mutterkörper (6), der mit einem damit zusammenarbeitenden Schraubengewinde ausgeführt ist, wobei die Muffe (1) mit Spielpassung über die Rohrenden (B) geschoben ist und wobei der Mutterkörper (6) einen Innenumfang hat, der sich in Richtung der Außenseite verengt, wobei in dem Mutterkörper (6) ein Klemmring (8) nach einem der vorhergehenden Ansprüche aufgenommen ist.

16. Vorrichtung nach Anspruch 15, **dadurch gekennzeichnet, dass** die Muffe (1) mit einem Dichtungsring (3) ausgeführt ist, der mit einem Rohrende (B) zusammenarbeitet.

## Revendications

1. Bague de fixation (8) pour réception dans un corps d'écrou (6) d'un dispositif pour raccorder de manière résistante à la traction deux extrémités tubulaires mutuellement alignées (B) de tuyaux de gaz ou de liquide, dans laquelle la bague de fixation (8) a un corps facultativement à plusieurs parties avec une surface interne dirigée vers les tubes (B) à raccorder, la surface interne de la bague de fixation (8) étant dotée d'un certain nombre d'éléments (12) qui sont fabriqués à partir d'un matériau qui est plus dur que le matériau du corps de la bague de fixation et qui forme des parties locales épaissies de la surface interne de la bague de fixation (8), **caractérisée en ce que** les éléments (12) sont agencés dans des évidements s'étendant de manière axiale dans le corps de la bague de fixation et ont une surface sensiblement cylindrique faisant saillie par rapport à la surface interne de la bague de fixation (8).

2. Bague de fixation (8) selon la revendication 1, **caractérisée en ce que** les éléments (12) sont sensiblement allongés et sont agencés dans la direction axiale.

3. Bague de fixation (8) selon la revendication 1 ou 2, **caractérisée en ce que** les éléments (12) se situent à une distance mutuelle sur la surface interne de la bague de fixation (8) comme on le voit le long d'une périphérie.

4. Bague de fixation (8) selon l'une quelconque des revendications précédentes, **caractérisée en ce que** les éléments sont des broches (12) qui sont agencées dans des évidements axiaux (13) dans la surface interne de la bague de fixation (8).

5. Bague de fixation (8) selon la revendication 4, **caractérisée en ce que** les évidements axiaux (13) sont sensiblement cylindriques, où une partie de l'élément (12) agencée à l'intérieur fait saillie par rapport à la surface interne de la bague de fixation (8).

6. Bague de fixation (8) selon l'une quelconque des revendications précédentes, **caractérisée en ce que** les éléments (12) sont distribués de manière régulière le long de la périphérie de la surface interne de la bague de fixation (8).

7. Bague de fixation (8) selon l'une quelconque des revendications précédentes, **caractérisée en ce que** les éléments (12) sont agencés suivant une partie de la longueur de la bague de fixation (8).

8. Bague de fixation (8) selon l'une quelconque des revendications précédentes, **caractérisée en ce que** les éléments (12) sont fabriqués à partir d'un métal tel que de l'acier inoxydable.

9. Bague de fixation (8) selon l'une quelconque des revendications précédentes, dans laquelle la bague de fixation (8) a une épaisseur de paroi (d), **caractérisée en ce que** l'épaisseur de paroi (d) diminue telle qu'on la voit dans la direction axiale.

10. Bague de fixation (8) selon l'une quelconque des revendications précédentes, **caractérisée en ce que** la surface interne de la bague de fixation (8) est dotée d'une surface augmentant le frottement, telle qu'une dentelure (11) dans la direction longitudinale.

11. Bague de fixation selon la revendication 10, **caractérisée en ce que** les éléments allongés (12) ont une forme qui est adaptée pour la surface augmentant le frottement.

12. Bague de fixation (8) selon l'une quelconque des revendications précédentes, **caractérisée en ce que** la bague de fixation (8) est construite à partir de deux demi-coques.

13. Bague de fixation (8) selon l'une quelconque des revendications précédentes, **caractérisée en ce que** la surface interne est dotée de deux encoches axiales opposées (9).

14. Bague de fixation (8) selon l'une quelconque des revendications précédentes, **caractérisée en ce que** la bague de fixation (8) est fabriquée à partir de matière plastique.

15. Dispositif pour raccorder de manière résistante à la traction deux extrémités tubulaires mutuellement alignées (B) de tuyaux de gaz ou de liquide, lequel dispositif comprend un manchon (1) avec un filetage de vis (5) et un corps d'écrou (6) intégré avec un filetage de vis coopératif, lequel manchon (1) est poussé avec un ajustement avec jeu sur les extrémités tubulaires (B) et lequel corps d'écrou (6) a une périphérie interne se rétrécissant vers l'extérieur, dans lequel corps d'écrou (6) est reçue une bague de fixation (8) telle que revendiquée dans l'une quelconque des revendications précédentes.

16. Dispositif selon la revendication 15, **caractérisé en ce que** le manchon (1) est intégré avec une bague d'étanchéité (3) coopérant avec une extrémité tubulaire (B).
